(19) Europäisches Patentamt
European Patent Office
Office européen des brevets

(11) **EP 4 149 333 B1**

(12) **EUROPEAN PATENT SPECIFICATION**

(45) Date of publication and mention
of the grant of the patent:
**04.06.2025  Bulletin 2025/23**

(21) Application number: **21726577.6**

(22) Date of filing: **10.05.2021**

(51) International Patent Classification (IPC):
*A47J 36/32* *(2006.01)*      *A47J 44/00* *(2006.01)*

(52) Cooperative Patent Classification (CPC):
**A47J 36/32; A47J 36/321; A47J 44/00**

(86) International application number:
**PCT/EP2021/062264**

(87) International publication number:
**WO 2021/228738 (18.11.2021 Gazette 2021/46)**

(54) **REPLICATION OF DISHES WITH A ROBOTIZED COOKER**

NACHBILDUNG VON SPEISEN MIT EINEM ROBOTERISIERTEN KOCHER

REPRODUCTION DE PLATS AVEC UN CUISEUR ROBOTISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **12.05.2020   HR 20200776**

(43) Date of publication of application:
**22.03.2023   Bulletin 2023/12**

(73) Proprietor: **Gamma Chef d.o.o.**
**21209 Mravince (HR)**

(72) Inventors:
• **DRNAS, Drazen**
**21209 Mravince (HR)**
• **NOLA, Dulijano**
**21000 Split (HR)**

(74) Representative: **Bihar, Zeljko**
**Admoveo d.o.o.**
**Gracanska cesta 111**
**10000 Zagreb (HR)**

(56) References cited:
DE-A1- 102015 103 596     US-A1- 2016 059 412
US-A1- 2016 235 239

**Description**

**Technical field**

The technical field is related to a food preparation in general, but in such a way, that on remote locations, a dish prepared elsewhere is replicated as accurately as possible on the said locations. Considering the character of the technical problem solved with the said invention, it can be considered that the technical field is related to remote controlled processes, based on preset parameters or in this specific case - food preparation parameters, more precisely, to one-pot dishes preparations.

**Technical problem**

Remote controlled cooking based on defined cooking protocols or previously defined recipes is well known in the art and it is not a subject of this invention.

The subject matter of the said invention relates to very accurate dish replication, in real time or almost in real time, where the original meal is prepared on a robotized master cooker and then, through network connections and a dedicated server, the replication of the same dish is done on one or several identical, robotized slave cookers, with the option of feedback regarding the replicated original. Also, the present invention is focused onto one-pot dishes only. The main difficulty when replicating a one-pot dish are the different initial cooking conditions and the requirement to perform the thermal processing of all ingredients and spices in a way, that fully complies with and that is identical to the chemical transformation of the ingredients and spices have undergone during the cooking process on the robotized master cooker.

This thermalization problem is solved by full adherence to the cooking thermograph (change of temperature in time) performed on the master cooker, shifted in time for each individual robotized slave cooker separately, and monitored by the server - so that adding ingredients and spices follows the cooking time dynamics of the master cooker, which is therefore shifted in time.

**Prior art**

The prior art offers an abundance of technical solutions for cooking, i.e. automated creation of a dish based on previously prepared ingredients and spices. We will list only a few of these below.

The PCT patent application, published as WO2016/160732A1 for the invention: AUTONOMOUS COOKING DEVICE TO PREPARE FOOD FROM A RECIPE FILE AND METHOD FOR CREATING RECIPE FILES, invented by P. Choudhary, teaches about replicating one-pot dishes, all based on recipes located on a server, that can be locally downloaded and where the said recipe is previously formed on the same device type. The difference between the present invention and the cited art is that the cited art solution performs optical control and cooking control through various sensors integrated into the robotized slave cookers, in a way that is not fully disclosed by the cited patent application, except in the part which claims that a comparison of the current dish image and images previously stored on the server is performed.

The US patent application published as US2016/235239A1 for the invention: PORTABLE FULLY AUTOMATIC COOKING SYSTEM, invented by P. B. Ghanshyambha, teaches of a fully automated robotic cooker, where the cooking process, the recipe and other values that are necessary for the cooking process can also be downloaded from a connected server. Based on invention's description, the scalability and flexibility of the solution enables active cooking on demand. However, the cited invention remains silent regarding the solution of different initial cooking conditions, thereby generated differences in quality of the dishes that are prepared on-demand. DE 10 2015 103596 A1 is another example or fully automated robotic cooker that can retrieve from the server or another cooking robot cooking parameters to which correction values may further be applied.

The EP patent published as EP2769598B1 for the invention: ADAPTIVE COOKING CONTROL FOR AN OVEN, invented by M. G. Nigel et al, discloses in the description details about the cooking physics necessary for the implementation of the subject invention, where we apply the mentioned cooking physics as a theoretical basis for the subject invention.

The article S. Reichel et al; MAMPF - An Intelligent Cooking Agent for Zoneless Stoves; 2011 Seventh International Conference on Intelligent Environments, Nottingham, 2011, pp. 171-178; DOI:10.1109/IE.2011.18 discloses a guided cooking system that directs and instructs the user at any moment during the cooking process in order to accurately replicate an individual dish. The system is computer controlled, but not fully automated and demands many interventions by the user. The operational function of this system can be seen on the Vimeo® platform: http://vimeo.com/ 19938951

The US patent application published as US2016/059412A1 for the invention: ROBOTIC MANIPULATION METHODS AND SYSTEMS FOR EXECUTING A DOMAIN-SPECIFIC APPLICATION IN AN INSTRUMENTED ENVIRONMENT WITH ELECTRONIC MINIMANIPULATION LIBRARIES, invented by M. Oleynik seems to be the relevant prior art for the present invention. It teaches about methods, computer program products, and computer systems of a robotic apparatus with robotic instructions replicating a food dish with substantially the same result as if the chef had prepared the food dish. In the first embodiment, the robotic apparatus in a standardized robotic kitchen comprises two robotic arms and hands that replicate the precise movements of a chef in the same sequence (or substantially the same sequence), which is similar to the one-pot robotized cooker used in the present invention for the dish replication. The differences are expressed in a method having steps described below.

None of the above listed prior art documents answer the question how to accurately replicate, in real time or almost real time, a dish from the robotized master cooker on one or several robotized slave cookers.

## Summary of the invention

The present invention discloses a method of operating data-processing system for monitoring and control of the replication of a one-pot dish prepared on the robotized master cooker and, in real time, on one or more remotely located identical robotized slave cookers. All mentioned cookers are networked within a network infrastructure by the corresponding network connections to which the robotized master cooker is also connected via its own network connection.

Each robotized cooker contains: a series of controllable ingredient compartments, a robotized spice dispenser with spice/seasoning containers, where their statuses are saved as a device status of ingredient compartments and spice containers $I_j(t)$ in time, where the index $j$ denotes the compartment or container. Furthermore, each robotized cooker contains a mixer drive with water dispenser processed as the related device status $M(t)$ in time, a cooking pot, a device for measurement of actual cooking temperature $T_c(t)$, and an electric cooktop with the information on delivered cooking power $P_c(t)$ during the cooking time. Each robotized cooker is further equipped with a control module with interface that controls all the above said parts of the robotized cooker and establishes connection to the network infrastructure. All robotized cookers are stocked with the same ingredients and spices in the same quantities, but later is not a condition having in mind built in measuring dispensers.

The said data-processing system for the dish replication is formed as a server capable for data processing, connected with the above-mentioned network infrastructure via its network connection to which all robotic cookers are connected. Said data-processing system receives a real time information from the robotized master cooker and all robotized slave cookers having different initial cooking conditions, and where this server, via a control module with interfaces, controls the replication of the dish prepared on each slave cooker. The server records values $T_{c,0}(t)$, $P_{c,0}(t)$, $I_{0,j}(t)$, $M_0(t)$ and $T_{c,i}(t)$ of the robotized master cooker and controls the values $P_{c,i}(t)$, $I_{i,j}(t)$, $M_i(t)$ of the robotized slave cookers, according to the recording values of the said master cooker.

The said method consists of the following steps under server's control:

A. recording of initial temperature $T_{c,0}(t = 0)$ of the master cooker and all initial temperatures $T_{c,i}(t = 0)$ of the slave cookers, and monitoring of the mentioned thermographs in time once the cooking process started on the master cooker, where the said master cooker is manually controlled via its control module with interface;

B. the server records the thermograph $T_{c,0}(t)$, the cooking power $P_{c,0}(t)$, the status of the ingredient compartments and spice containers $I_{0,j}(t)$ and the status of the mixer drive with water dispenser $M_0(t)$ on the master cooker as the function of time $t$;

C. when the master cooker temperature $T_{c,0}(t)$ surpase the threshold temperature $T_{tr}$, $T_{c,0}(t) > T_{tr}$, the server starts the control of the cooking process on the robotized slave cookers such as to replicate in the slave cookers the recorded values $T_{c,0}(t)$, $P_{c,0}(t)$, $I_{0,j}(t)$ and $M_0(t)$ of the robotized master cooker, controlling the said cookers via their network connections, where the cooking process is conducted in a way:

(i) that the power regulation $P_{c,i}(t)$ of all slave cookers is regulated in a way to replicate the master cooker thermograph $T_{c,0}(t)$ by the slave cookers, where for each $T_{c,0}(t) > T_{tr}$ the following equation have to be satisfied:

$$T_{c,i}(t) \approx T_{c,0}(t - \Delta t_i)$$

where each value $\Delta t_i$ defines the time difference between the beginning of the cooking on each selected slave cooker and the master cooker, calculated from the historic data in order to satisfy relation $T_{c,i}(t' + \Delta t_i) = T(t')_{c,0}$ when $T_{c,0}(t') = T_{tr}$;

(ii) where the status of all ingredient compartments and spice containers of each slave cooker is delayed in their dispensing for the previously determined time $\Delta t_i$, to hold the relation: $I_{i,j}(t) = I_{0,j}(t - \Delta t_i)$, with respect to the master cooker; and

(iii) where the status of the mixer drive and water dispenser on each slave cooker is delayed in their dispensing and stirring for the previously determined time $\Delta t_i$, to hold the relation: $M_i(t) = M_0(t - \Delta t_i)$, with respect to the master cooker;

D. when the cooking process is finished on the master cooker, the corresponding robotized slave cookers cooking processes last for $\Delta t_i$ time more, until the one-pot dish replication process finishes on each slave cooker.

In one embodiment, the power regulation $P_{c,i}(t)$ of all slave cookers, in order to replicate the master cooker thermograph $T(t)_{c,0}$, is performed in a way that for times $t > \Delta t_i$ the following relation is used:

$$P_{c,i}(t) = P_{c,0}(t - \Delta t_i) + A \cdot \left( T_{c,0}(t - \Delta t_i) - T_{c,i}(t) \right)$$

where value $A$ is defined empirically for all slave cookers. The whole system is designed in a way that any of the robotized slave cookers can act as the robotized master cooker, if needed, and vice versa.

The system is designed in such a way, that the server receives and processes the users' feedback regarding the quality of the replicated dish from each of the robotized slave cookers if necessary.

The application of the said data-processing system for the replication of one-pot dishes prepared on the robotized master cooker and in real time on one or multiple remote-located, identical robotized slave cookers is among many others meant for preparation and testing of dishes in, for instance, TV culinary spectacles. A famous Chef, a TV celebrity or a third person prepares a dish in the studio on the robotized master cooker. This process is then broadcasted live on TV or through Internet channels like Youtube®, FB® live and similar. Viewers who have an identical robotized cooker can create a replica of the dish prepared in the studio in almost real time and with the same quality.

In one other variant, the said data-processing system is used for preparation of dishes in restaurants within the same franchise, all in order to deliver same quality of finished dishes at all remote locations.

In yet another variant, the said data-processing system is used for preparation of dishes in a restaurant by an invited Chef, who is on a remote location. This Chef prepares the dish on a robotized master cooker and the guests are in the remote restaurant, where exact the same dish is replicated in real time and with the same quality on one or more identical, robotized slave cookers in the restaurant.

The said invention discloses the data-processing system which consists of at least one server, connected to one robotized master cooker and at least one robotized slave cooker, mutually networked through a network infrastructure, for performing the method of replication of a one-pot dish prepared on the robotized master cooker and, in real time, on one or more remote located identical robotized slave cookers.

## Description of figures

Figure 1 shows the robotized cooker with its basic parts. Figure 2 shows the cooking pot used in the robotized cooker with denoted locations of heat energy input and energy losses.

Figure 3 shows a networked replication of a dish scheme, where the robotized master cooker is controlling a series of identical robotized slave cookers.

Figure 4A shows the experiment of adding water and then pasta in the cooking process, whereas the nominal heater power is 1500 W, with temperature monitoring based on optical thermometer and contact thermometer (probe).

Figure 4B shows the experiment of adding water and then pasta in the cooking process, whereas the nominal heater power is 750 W, with temperature monitoring based on optical thermometer and contact thermometer (probe).

Figure 5 shows the cooking process of one robotized master cooker and one robotized slave cooker in 40 second delay of the process phase.

## Detailed description of the invention

The present invention relates to replication of dishes, with minimum delay, on a remote location and with a series of robotized slave cookers on which a dish is replicated that is prepared on an identical, robotized master cooker.

Robotized cooker

An example of such a robotized cooker for preparation of one-pot dishes can be found on the below listed Youtube® links:

(i) Gammachef®: https://www.youtube.com/watch?v=Ip56ZlyIrWo
(ii)MegCook®: https://www.youtube.com/watch?v=YSY1yMW3ZU0

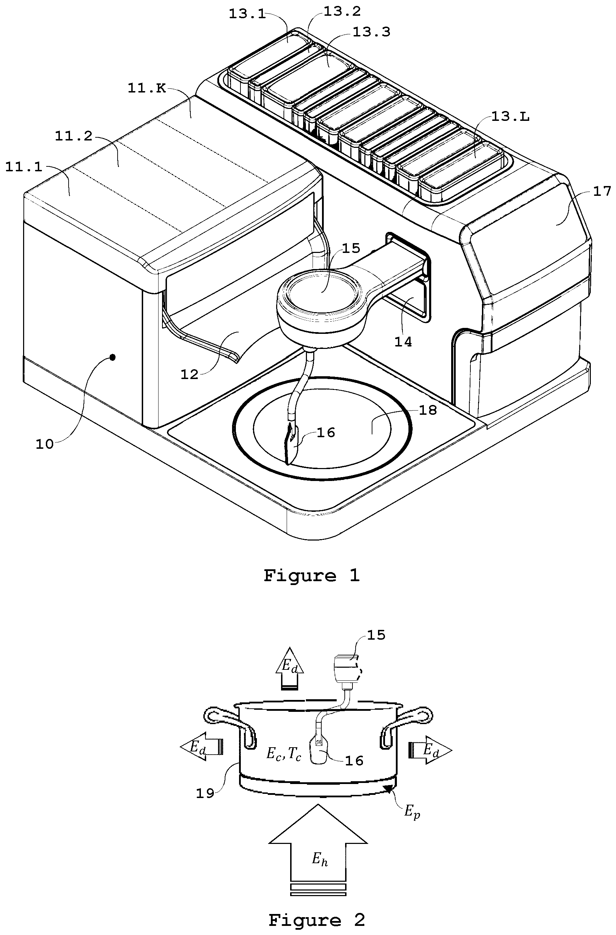

and in this example, a detailed description of GammaChef® robotized cooker (10) is given. Said cooker is designed for one-pot (19) dish preparation for performing the said invention. The robotized cooker (10) consists of, see Figure 1:

- one or more automated ingredient compartments (11) connected to a funneled slide (12),
- one or more containers for spices (13),
- a robotized spice dispenser (14),
- a mixer drive with water dispenser (15),
- a mixing blade (16),
- an electric cooktop (18)
- a pot (19), see Figure 2, and the
- a control module with the interface (17).

The automated ingredient compartments for (11.1, 11.2, ..., 11.K) are designed for the basic ingredients for the dish preparation, which are loaded into these compartments. This means that the said compartments mainly contain meat, fish, crayfish, mushrooms, pasta, rice, potatoes, gnocchi, or similar essential ingredients for the preparation of an individual dish. Each of the compartments (11.1, 11.2, ... 11.K) can be further equipped with a separate device that enables the separate discharge of the compartment (11.i), following a command by the control module with the interface (17), by pushing the compartment content with an electromechanical module or an actuator forwards towards the pot (19). Also, a special electromechanical actuator has been developed in practice, which, even it is a single device, discharges the selected ingredients compartment (11.i) alone by actuator motion, following a command from the interfaced control module (17). Irrespective of the discharge modus of the said ingredients compartment (11.i), the content of such selected compartment is pushed towards the funneled slide (12), that transports the entire content from the selected compartment (11.i) into the cooking pot (19). In more advanced versions of this robotized cooker (10), the automated ingredients compartments (11.1, 11.2, ... 11.K) may be additionally equipped with a cooling system, for instance based on Peltier elements or standard cooling techniques with micro-compressor that enable preservation of temperature of sensible ingredients during a longer period of time. This is especially important in regions with warm climate and when the ingredients in the compartments (11.i) are perishable like fish, mollusks, or sensitive types of a meat.
The spice - seasoning containers (13.1, 13.2, ..., 13.L) are also an integral part of the robotized cooker. Along with the standard set of spices consisting of salt, pepper, peppers, turmeric, etc., the containers (13.1, 13.2, ..., 13.L) may also contain oil, wine or other liquids, like fish soup stocks. The content from these spice containers (13.1, 13.2, ... 13.L) is discharged into the cooking pot (19) with a robotized dispenser (14), whereas the content of the spice container is first discharged within the casing in the dispenser - and then the robotized dispenser (14) discharges the content into the cooking pot (19). YT® video from the reference (1) reveals the whole process in detail.
The robotized cooker (10) is equipped with a mixer unit drive with water dispenser (15). The mechanical drive enables complex, cycloid motions of the stirring blade (16), which in return enables the entire surface of the pot bottom (19) to be properly "wiped" in a short period of time. Also, a direct water dispenser at the mixer drive is connected with the container integrated into the casing of the robotized cooker (10), which dispenses water into the cooking pot (19) with a pump system. Namely, water is an ingredient that, along with the other ingredients in the compartments (11), represents the main mass of the dish to be prepared.
The robotized cooker (10) has an electric cooktop (18), preferably of induction type, but that is not a mandatory requirement. The electric cooktop (18) with its nominal power and dimensions is adjusted to the dimensions of the cooking pot (19), all in order to enable sufficient power reserves for possible unfavorable scenarios during the cooking process, i.e., when the cooking pot (19) needs more energy due to the energy dissipation.
The interfaced control module (17) consists of a screen for dish selection, a micro-controller with memory for storage of recipes and for the control of the device itself. The micro - controller controls the following: electric cooktop (18), automated compartments for ingredients (11.1, 11.2, ..., 11.K), robotized dispenser (14) for providing spices from the spice - seasoning containers (13.1, 13.2, ..., 13.L), mixer and water dispenser units (15).
As shown in the video (i), after selection of a recipe and previously stocking the ingredients compartment (11.i) and spice - seasoning containers (13.k) - the robotized cooker (10) is ready for the cooking process - preparation of the selected dish from the memory of the interfaced control module (17). Besides autonomous operation of the robotized cooker (10), the device can also be controlled via network connection formed in a way that is well-known in the related art, like a device from the home network - i.e., a WI-FI router or autonomous 3G, 4G or 5G integrated radio module.

The person skilled in the art should be fully aware that the autonomous device presented in the reference (i) may also be remotely controlled within the same network, i.e., with a tablet or a cell phone from anywhere in the world through a standard internet connection.

Monitoring of the cooking temperature

The monitoring of the cooking temperature is not essential for the programmed cooking process control. Namely, the recipes stored in the memory of the interfaced control module (17) have preset times of adding ingredients, preset quantities of ingredients and status of the electric cooktop (18), recorded as cooktop power, along with predefined quantities of spices, seasoning and water.

On the other hand, the monitoring of the temperature becomes important when a dish is replicated in real time via multiple robotized slave cookers (10.i); i=1 ... N, which replicate a dish that is prepared on the main robotized master cooker (10.0). Based on different initial cooking conditions, the cooking physics on the slave cooker (10.i) may significantly differ from the cooking physics on the master cooker (10.0) and this fact needs to be taken into consideration to accurately and properly replicate the dish. For these reasons both, the robotized master cooker (10.0) and the series of remotely located robotized slave cookers (10.i); i=1 ... N, must be equipped with at least one identical measurement probe for determination of the cooking temperature $T_c$ in time. Such probe may, for example, be integrated into the mixing blade (16), it can be permanently or separately immersed into the cooking pot itself (19) or the cooking temperature sampling may be done based on optical, i.e., contactless method.

Each of the above options has its advantages and disadvantages. The probe integrated into the mixing blade (16) is surely the best technical solution since it enables temperature sampling all over the entire pot (19) bottom. This principle is excellent in regard of heat dissipation connected to the mass of ingredients at a certain spot and the temperature probe integrated into the mixing blade (16) is able to accurately read the volume distribution of temperature in the cooking pot itself (19). On the other hand, the disadvantage of such solution is the cost of the said technical solution and the exposure to contact problems during longer usage.

If one contemplates of a probe that at some spot is immersed into the cooking pot (19), such probe is a relatively cheap probe, but it will only read the cooking temperature $T_c$ in a smaller part of the cooking pot (19). Optical (contactless) temperature reading seems to be the best technical solution from the perspective of cost control of the overall device, reliability over a long period of time and maximum efficiency.

Cooking physics and replication of dishes

Understanding the cooking physics is of the greatest importance for an accurate replication of dishes on robotized slave cookers (10.i); i=1 ... N at remote locations and far from the robotized master cooker device (10.0).

The cooking process, where under cooking we understand also baking and heating up of food, is a thermo-dynamic process, where the energy of the electric cooktop (18) $E_h$ is transferred onto the ingredients, spices and other constituents in the cooking pot (19). This process can be described with a simple equation:

$$E_h = E_c + E_d + E_p \qquad (1)$$

where $E_c$ represents the cooking energy and $E_d$ the dissipation energy that is transported outside the cooking pot (19) by radiation and by convectional conducting of heated air, see Figure 2, while a part of the energy $E_p$ is used to raise the temperature of the cooking pot (19) itself. The cooking energy $E_c$ of the coking mass increases the temperature of all ingredients in the pot (19), in a way that can be physically described, as an approximation, by the equation (2):

$$E_c = \sum_{j=1}^{P} m_j C_j \left( T_c - T_j \right) \qquad (2)$$

where $m_j$ represents the mass of ingredients (ingredients, spices and seasonings, water); $C_j$ represents the specific heat capacity of the ingredients, $T_j$ stands for the initial ingredients temperatures and $T_c$ is the actual temperature of the mixture that is being cooked. The major contributing factor to the entire dish heat capacity is given by the mass of water, mainly due to the large specific heat capacity of approx. 4200 J/(kg·K). For some other ingredients used in processing of food products, we can find their specific heat capacity data on the following link:
https://www.engineeringtoolbox.com/specific-heat-capacity-food-d_295.html

We can see that the specific heat capacity of potatoes is approximately 6x less than water and meat, or even 10x less than dried mushrooms, etc. Also, in case of frozen ingredients the phase changing temperature - so called latent temperature, must be taken into account and the "values" for frozen ingredients found in literature have to be applied.

It needs to be emphasized that cooking is a process where a chemical change in ingredients takes place, in their organic compounds, which does not change the chemical constitution in a fast or significant way at temperatures below 40°C. Simply to said, it is only important how long food remained in a "cooking" state, and how much in total of the cooking energy $E_c$ has been transferred onto the food mixture at temperatures above 40°C. The previous cooking history for temperatures below 40°C does not significantly contribute to the quality of the dish since the chemical changes caused by temperature have not impacted the chemical transformation of the ingredients.

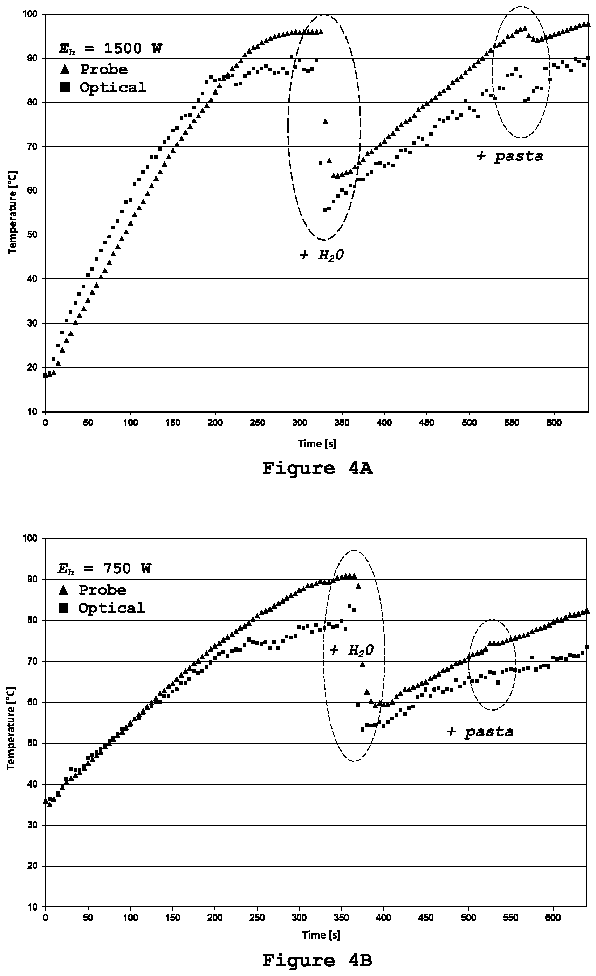

A simple cooking experiment is presented on Figures 4A and 4B. The cooking experiment has been performed twice with a heater of nominal power 1500W - Figure 4A and a heater of nominal power 750 W - Figure 4B. The temperature $T_c$ of the mixture was determined by the probe ▲ immersed in the pot (19) and in parallel by the contactless thermometer ■ . The temperature was sampled every five seconds.

In both demonstrational experiments the "cooking" starts by heating of 1 liter of water from some initial temperature - Figure 4A at 18°C, Figure 4B at 35°C. When the saturation temperature of approx. 85°C was reached and optically determined, another liter of water, having room temperature, is added - which causes a sudden drop in temperature followed by a standard increase in temperature based on exponential law: $\sim(1 - e^{-\frac{t}{\tau}})$ where $\tau$ represents the function of specific heat capacity and heat resistance (dissipative heat resistance) in the relation between the cooking pot (19) and the environment. Adding 350 grams of pasta of small specific heat capacity, that is ~5x less than water, caused almost no impact onto the heating up curve, i.e. the thermograms.

In this simple model, the overall cooking energy $E_c$ can be expressed through equation (2), bearing in mind the assumption that thermic food processing for temperatures below 40°C is not taken into account. The equation (2) should be supplemented with adequate masses when new water or new pasta is added, and all above said represents a general elementary physics.

Another important parameter that can be interpreted from the Figures 4A and 4B is the effective cooking energy $P_c$ definded via the equation (3):

$$P_c = dE_c/dt \qquad (3)$$

which gives the information of the cooking energy transfer $E_c$ onto the dish itself.

It is instructive to see now how to replicate a certain dish in a simple way at a remote location. The requirement is that at both locations the same set of ingredients and spices/seasonings in identical quantities, with difference margin of not more than 10%, are used and that we have almost identical electric cooktops (18) with sufficient power reserve. It is clear, that the initial temperatures of the ingredients will not be the same, but as emphasized above, this is not important for the cooking temperatures below 40°C. Also, the outside conditions for the cooking process do not have to be the same, the environment of the cooker may vary from a cold winter temperature of 5°C up to a hot summer temperature of 40°C. Therefore, the ingredients do not have the same initial temperatures and the number of variables for solving the exact model can be rather large.

It is sufficient to record the cooking temperature on the master cooker in time, i.e., to create a cooking thermograph that directly reflects the quantity of energy brought into the dish and the speed of energy transfer, i.e. the power, as a time derivative of the entered energy.

During the cooking phase, i.e. in between two additions of ingredients, from the thermographs depicted via Figures 4A or 4B, it is clear that the mass and specific heat capacity of this dish is more or less constant, the heating process obey the equation (2). Therefore, it is also clear in example depicted in Figure 4A that for $t > 325\,s$, when we add a new liter of room temperature water into the system, the new energy $E_c$ is entered into the cooking system:

$$E_c\,(T, t > 325s) = const \cdot (T - 55°C) \qquad (4)$$

where 55°C represents the initial cooking temperature following the addition of another ingredient and the constant includes masses and specific heat capacities of the foodstuff and other ingredients in the pot. The temperature increasing in time gives the information of the cooking power $P_c$ via the equation (3).

Once the energy saturation is achieved, or the stationary state is reached where the cooking temperature is constant, the cooking time becomes important. For a proper and good chemical transformation of the ingredients, the cooking time also matters since pasta, rice and similar ingredients have to be cooked differently, at different temperatures with different cooking times. The same goes for preparation of meat or fish; if we want something baked or just boiled, the cooking conditions are different in both energy and in time.

Based on the above, the person skilled in the art understands that for a successful replication of a dish the thermographs saved on the main master robotized cooker must be replicated as accurately as possible, in order to transfer the same cooking energy after new ingredients are added into the dish being prepared, along with more or less the same cooking power, depending on the environmental conditions around the pot (19) and the initial ingredients temperatures.

Thermograph replication

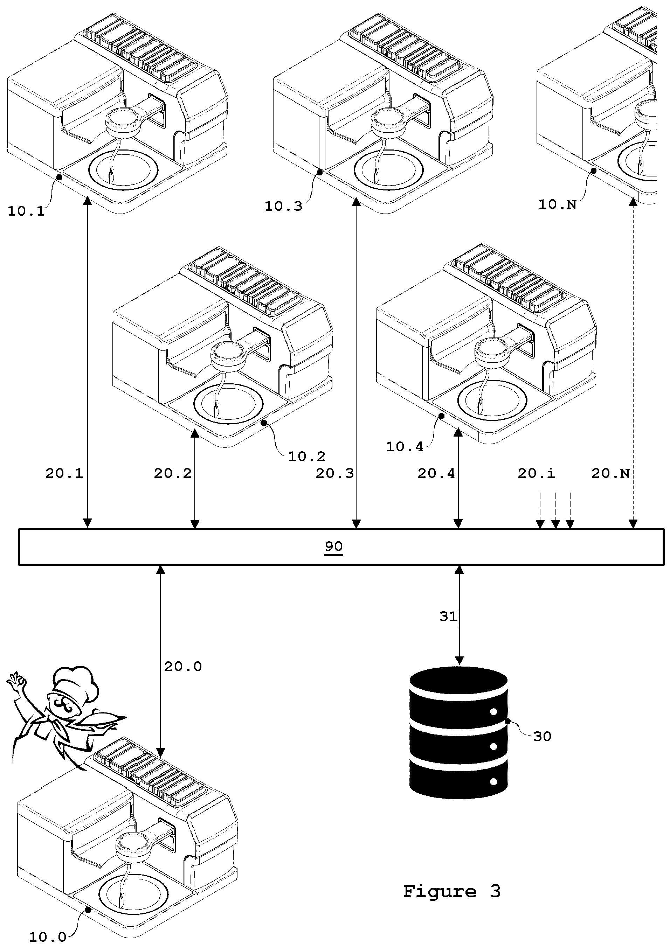

Figure 3 shows the schema of dish replication via the network, where the robotized master cooker (10.0) controls a series of identical, robotized slave cookers (10.i); i=1 ... N. All robotized cookers (10) are connected to the network infrastructure (90), i.e. Internet, either by cable or wireless connections (20.0; 20.i), in any way already known in the art. Along with the above mentioned robotized cookers (10.0; 10.i), at least one server (30) is also connected to the network infrastructure (90), via the network connection (31).

The role of this server (30) is to act as the data-processing device, to collect data from the robotized cooker (10.0), process such data and control the cooking process on identical robotized cookers (10.i); i = 1 ... N through data sent to and received by the cookers (10.i).

The server (30) collects data in real time, for each individual device i=0 ... N, where the data are:

- cooking temperature $T_{c,i}$;
- delivered heater power $P_{c,i}$;

and performs a check on the master cooker (10.0) in regard of:

- status of the ingredient compartments and spice containers $I_{0,j}$;
- status of the mixer drive and water dispenser $M_0$;

which is recorded along with lapsed cooking time.

The server (30) controls the ingredients compartments and spices containers $I_{i,j}$ of the slave cookers (10.i), as well as their mixer drives with water dispensers $M_i$.

As mentioned earlier, the initial conditions of the robotized master cooker (10.0) and the set of robotized slave cookers (10.i); i=1 ... N, on which a dish is replicated, may differ significantly. Environmental temperatures, ingredients, water, cooking pots (19) may all significantly differ, which means that the proper and accurate replication of a dish, via thermograph, cannot be done only based on transfer of information on the status of the heater (18.0) of the master cooker and the moment when an ingredient must be added.

The set of identical cookers (10.0) and (10.i); i=1 ... N, is loaded with same ingredients, placed into the same compartments (11.0; 11.i) with same distribution of spices, oil and other cooking seasonings and mixtures in the spice/seasoning containers (13.0; 13.i). Once the cooking process begins, the Chef, i.e., a human, starts the cooking process in real time on the control module with interface (17.0) or for instance, on a tablet networked with the cooker (10.0). He or she switches the heater (18.0), the mixer drive (15.0), and controls the ingredients and spices discharge in the desired order to obtain the one-pot dish. The server records all changes performed on the master cooker (10.0) in time.

Replicating the thermograph is somewhat more complex and is based on the power control of the electric cooktop (18.i) with a power reserve. From the explanations above, it is evident that the way of achieving the dish temperature is crucial for the replication of the said main and original dish. This means that the power of the electric cooktops (18.i) has to be defined in such a way, that changes in the cooking temperature in time $dT_{c,i}/dt$, i=1 ... N, follow the changes on the master cooker $dT_{c,0}/dt$ as well.

Again, because of the different initial conditions, the thermographs should be shifted in time in such a way, that one or more electric cooktops (18.i) are delayed in reaching the temperature of the master cooker. This delay period will not be eliminated during monitoring on the robotized cooker (10.i), but the ingredients and spices will be added later in time in order to replicate the thermograph $dT_{c,0}/dt$ as accurately as possible from the robotized master cooker onto the robotized slave cookers $dT_{c,i}/dt$. It should be noted that the said thermographs are shifted for a $\Delta t_i$ in time, that is different for each device and amounts to, for instance 5, 10, 50 or 100 seconds. This shift in time means that adding other ingredients and spices is equally delayed in time, as well as the stirring and all other operations.

The process control is based to the technical problem defined in equation (5), i.e., to maintain the conditions:

$$\frac{dT(t)_{c,0}}{dt} = \frac{dT_{c,1}(t + \Delta t_1)}{dt} = \frac{dT_{c,2}(t + \Delta t_2)}{dt} = \cdots = \frac{dT_{c,N}(t + \Delta t_N)}{dt}$$

$$(5)$$

where values $\Delta t_i$ define the time differences of the beginning of cooking processes on each robotized slave cooker in respect to the master cooker cooking process start.

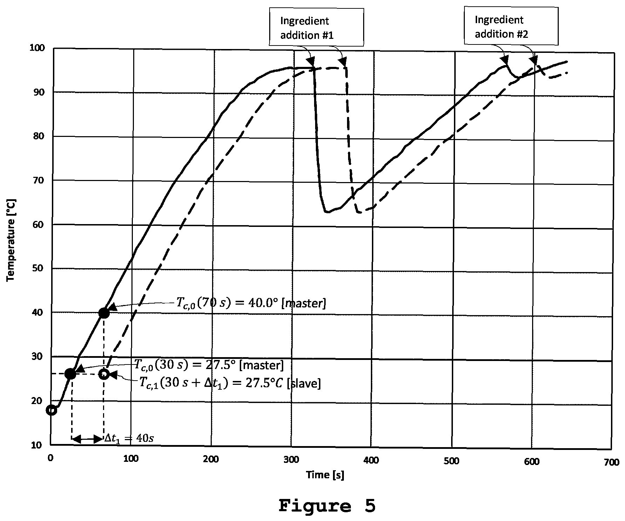

Each value $\Delta t_i$ is determined as follows: when the temperature of the *master* cooker $T(t)_{c,0}$ reaches the threshold cooking temperature $T_{tr}$, for instance $T_{c,0}(t') = T_{tr}$ = 40°C or slightly higher, the system reads the temperatures of the corresponding slave cooker i in the same time $T_{c,i}(t')$ and search on the master cooker $T_{c,0}(t)$ thermograph for the time $t_i''$, i.e. the time for which holds $T_{c,0}(t_i'') = T_{c,i}(t')$. The interval between these times is $\Delta t_i = t' - t_i''$. If the master thermograph $T_{c,0}(t)$ remains silent for the data where $T_{c,0}(t_i'') = T_{c,i}(t')$, i.e. from the historic data, the linear extrapolation the approximate $t_i''$ is calculated to accurately determine delay times for each slave cooker. A simple example is presented on Figure 5, showing the procedure of determination of $t'$, which is 70 sec, $T_{c,0}(70) = 40.0° C$, then by backward search in the master cooker data for an identical temperature gives the delay time $\Delta t_1$ = 40s.

It needs to be mentioned that the temperature samplings are always individual, but that accuracy can be achieved by data smoothing in the manner well known in the art, e.g., by averaging, by fitting, parabolas, splines, or similar curves.

The final question that remains to be solved is by which algorithm one can "copy" the thermograph executed on the master cooker (10.0) on the corresponding slave cookers (10.i), denoted by the expression (6):

$$\left(\frac{dT_{c,0}(t)}{dt}\right) = \left(\frac{dT_{c,i}(t+\Delta t_i)}{dt}\right)$$

$$(6)$$

These are systems where the masses are identical and rather constant, but with different energy dissipations involved in each cooking process. That means that the heat conduction between the heaters (18.i) and the cooking pots (19.i) are an approximate constant value, so the above formula can be rewritten using the expression (7):

$$P_{c,0}(t) = P_{c,i}(t+\Delta t_i) + \Delta P_{d,i} \qquad (7)$$

where the value $\Delta P_{d,i}$ - additional unknown dissipation - should be deducted from or added to the slave cooking pot, all in order to compensate the difference in the initial cooking conditions and other imperfections of the robotized cookers themselves.

In a very simple model of relatively constant dissipation losses, we can use instead of cooking power $P_{c,0}$ the heater power $P_{h,0}$ in equations (1) and (3):

$$P_{h,0}(t) = P_{h,i}(t+\Delta t_i) + \Delta P_{d,i} \qquad (8)$$

In the simplified model, the value $\Delta P_{d,i}$ needs to be controlled, i.e., via linear response of the differences among the actual and required temperatures recorded via the thermograph. For that, the proportionality constant $A_i > 0$ for the said linear response can be used, where the said constant is empirically determined in a way that prevents temperature oscillations of the system due to the measurement delays and thermal inertia of the system; see equation (9):

$$P_{c,0}(t) = P_{c,i}(t+\Delta t_i) - A_i \cdot \left(T_{c,0}(t) - T_{c,i}(t+\Delta t_i)\right) \qquad (9)$$

Because of identical master-slave cookers, once determined $A > 0$ is the same for all cookers and the equation (9) may be simplified as expression (10):

$$P_{c,i}(t) = P_{c,0}(t-\Delta t_i) + A \cdot \left(T_{c,0}(t-\Delta t_i) - T_{c,i}(t)\right) \qquad (10)$$

Batter controllers may include advanced PID regulation and control of parameters $\Delta P_{d,i}$ from expression (8), minimizing the differences of both sides' equation (8) to zero. Reference for PID regulation can be obtained from https://en.wikipedia.org/wiki/PID_controller

It is very easy to implement in practice the expression (10) for the thermograph replication.

The implementation is presented through the example on Figure 5. The initial temperature of the master cooker $T_{c,0}(t)$ is 18°C and of the only slave cooker has $T_{c,1}(t) \sim 27°C$. In $t = 0$ the heating of the master cooker is initiated with the $P_{c,0}$ with some ingredients in the cooking pot (19) and $T_{c,0}(t)$ increases in time, so we get the thermograph of the master cooker as a solid line on Figure 5. In this specific case, the cooking pot (19) initially contained 1 liter of water and the server (3) records the curve $T_{c,0}(t)$ and the equivalent power $P_{c,0}(t)$ of the master cooker. At the same time, the server also records the status, in this example, of the only slave cooker - $T_{c,1}(t)$ and $P_{c,1}(t)$.

At the moment when $T_{c,0}(t)$ reaches the critical cooking temperature $T_{tr}$, here set at 40°C, we read-off the time that is 70 seconds from the start of the cooking process. The temperature of the slave cooker is still at the initial 27°C. The server (30) now requests historic data in time and finds, that for $t = 30\ s$ the temperature of the master cooker $T_{c,0}(30)$ was approx. 27°C, so that the difference of these times defines $\Delta t_1 = 70\ s - 30\ s = 40\ s$. In other words, the thermograph $T_{c,1}(t)$ follows the delay in time for $\Delta t_1$; so all subsequent processes have to be delayed the same way in time; see the moments when ingredients #1 (an additional liter of water) and #2 (350 gr. pasta) are added in, Figure 5, both at approximate room temperature.

The historic data of the robotized master cooker are recorded in a vector form $\{T_{c,0}(t), P_{c,0}(t), I_{0,j}(t), M_0(t)\}$ on the server (30), and are replicated onto the robotized slave cooker via server (30) and the corresponding network infrastructure in such a way, that in the simplest version of the invention we have the following process parameters:

A. that the process gives $T_{c,i}(t) \approx T_{c,0}(t - \Delta t_i)$;
B. that the power regulation is forced via linear response:

$$P_{c,i}(t) = P_{c,0}(t - \Delta t_i) + A \cdot \left( T_{c,0}(t - \Delta t_i) - T_{c,i}(t) \right)$$

C. status of all ingredients compartments and spice containers are:

$$I_{i,j}(t) = I_{0,j}(t - \Delta t_i)$$

D. status of the mixer drive and water dispenser are:

$$M_i(t) = M_0(t - \Delta t_i)$$

The person skilled in the art will understand that step B. can also be executed by PID or another regulating/control system that controls cooking power via the heater power. The changes in the cooking system due to thermal inertia, the accuracy of $\Delta t_i$ is not decisive for the replication of the thermograph. An error of 5 or 10 seconds is easily compensated in regulation executed in step B., which is done before the significant chemical processing of ingredients (cooking) has started, i.e., for $T_{c,i}(t) > 60°C$. Simply to said, until these temperatures are reached, the data processing system will certainly lock the slave cookers behavior to the master cooker thermograph.

During the replication of the thermograph, all data passing through the server (30) and the server itself (30), are the ones that copy and replicate the behavior of the master cooker on the slave cookers, in almost real time, with the delay $\Delta t_i$ which is in the range between 10 - 100 seconds and can be classified as quasi-real time, the time delay that is irrelevant for the slave cookers users.

## Industrial application

The industrial application of the invention is obvious. The present invention is used for monitoring the replication of a dish prepared in one single pot on a robotized master cooker and in real time on one or several remote, identical robotized slave cookers. Among other, the present invention is useful in preparation and testing of dishes in TV culinary spectacles.

Another option of application is the usage of the system in preparation of dishes in restaurants within the same franchise, all in order to deliver the same quality of a prepared dish at a remote location. The system is also applicable at events where the main Chef of a restaurant chain/franchise cooks in all his/her restaurants at the same time for the purpose of a show.

Finally, for the person skilled in the art will recognize the application of the said system in households as a robotized cooking system and in hospitality and catering as obvious.

## References

10 -       robotized cooker
10.0 -    robotized cooker [master]
10.i -     robotized cooker [slave] i=1 ... N
11 -       ingredient compartment

| 12 - | funneled slide |
|------|----------------|
| 13 - | spice/seasoning container |
| 14 - | robotized spice dispenser |
| 15 - | mixer drive with water dispenser |
| 16 - | mixer blade |
| 17 - | control module with interface |
| 18 - | electric cooktop |
| 19 - | cooking pot |
| 20 - | network connection |
| 30 - | server |
| 31 - | network connection |
| 90 - | network infrastructure |

**Claims**

1. A method of operating data-processing system (30) for monitoring and control of the replication of a one-pot dish prepared on a robotized master cooker (10.0) and, in real time, on one or more remotely located identical robotized slave cookers (10.i), networked within a network infrastructure (90) by the corresponding network connections (20.i); i=1 ... N, to which the robotized master cooker (10.0) is connected with its own network connection (20.0);

   - where each robotized cooker (10) contains: a series of controllable ingredient compartments (11), a robotized spice dispenser (14) with spice/seasoning containers (13), where their statuses are saved as a device status of ingredient compartments and spice containers $I_j(t)$ in time, where the index $j$ denotes the compartment (11) or container (13), a mixer drive with water dispenser (15) with a device status $M(t)$ in time, a cooking pot (19), a thermograph for measurement of actual cooking temperature $T_c(t)$, an electric cooktop (18) with the information on delivered cooking power $P_c(t)$ in time and a control module with the interface (17) that controls all the above said parts of the robotized cooker (10) and establishes connection to the network infrastructure (90);
   - where all robotized cookers (10) are stocked with the same ingredients and spices before the beginning of the cooking process;
   - where the said data-processing system for the dish replication is formed as a server (30) capable for data processing, connected with the above mentioned network infrastructure (90) via its network connection (31), and which is receiving a real time information from the robotized master cooker (10.0) and all robotized slave cookers (10.i) having different initial cooking conditions, and where this server (30), via control module with interfaces (17.i), controls the replication of the dish prepared on each slave cooker (10.i) by recording the values $T_{c,0}(t)$, $P_{c,0}(t)$, $I_{0,j}(t)$, $M_0(t)$ and $T_{c,i}(t)$ of the robotized master cooker (10.0) and controlling the value $P_{c,i}(t)$, $I_{i,j}(t)$, $M_i(t)$ of the robotized slave cookers (10.i), according to the recorded values of the said master cooker (10.0);

   wherein the said method consists of the following steps under server (30) control:

   A. recording of initial temperature $T_{c,0}(t=0)$ of the master cooker (10.0) and all initial temperatures $T_{c,i}(t=0)$ of the slave cookers (10.i) and monitoring of the mentioned thermographs in time once the cooking process started on the master cooker (10.0), where the said master cooker (10.0) is manually controlled via its control module with the interface (17);
   B. the server (30) records the thermograph $T_{c,0}(t)$, the cooking power $P_{c,0}(t)$, the status of the ingredient compartments and spice containers $I_{0,j}(t)$ and the status of the mixer drive with water dispenser $M_0(t)$ on the master cooker (10.0) as the function of time $t$;
   C. when the master cooker (10.0) temperature $T_{c,0}(t)$ surpass the threshold temperature $T_{tr}$, $T_{c,0}(t)>T_{tr}$, the server (30) starts the control of the cooking process on the robotized slave cookers (10.i) such as to replicate in the slave cookers the recorded values $T_{c,0}(t)$, $P_{c,0}(t)$, $I_{0,j}(t)$ and $M_0(t)$ of the robotized master cooker (10.0), controlling the said cookers via their network connections (20.i), where the cooking process is conducted in a way:

      (i) that the power regulation $P_{c,i}(t)$ of all slave cookers (10.i) is regulated to replicate the master cooker (10.0) thermograph $T_{c,0}(t)$ by the slave cookers (10.i), where for each $T_{c,0}(t)>T_{tr}$ the following equation is satisfied:

$$T_{c,i}(t) \approx T_{c,0}(t - \Delta t_i)$$

      where each value $\Delta t_i$ defines the time difference between the beginning of the cooking process on each selected slave cooker (10.i) and the master cooker (10.0), calculated from the historic data in order to satisfy simultaneously $T_{c,i}(t' + \Delta t_i) = T(t')_{c,0}$ and $T_{c,0}(t') = T_{tr}$;

(ii) where the status of all ingredient compartments and spice containers of each slave cooker (10.i) is delayed in their dispensing for the previously determined time $\Delta t_i$, to hold the relation: $I_{i,j}(t) = I_{0,j}(t - \Delta t_i)$, in respect to the master cooker (10.0); and

(iii) where the status of the mixer drive and water dispenser on each slave cooker (10.i) is delayed in their dispensing and stirring for the previously determined time $\Delta t_i$, to hold the relation: $M_i(t) = M_0(t - \Delta t_i)$, in respect to the master cooker (10.0); and

D. when the cooking process is finished on the master cooker (10.0), the corresponding robotized slave cookers (10.i) cooking processes last for $\Delta t_i$ time more, until the one-pot dish replication process finishes on each slave cooker (10.i).

2. The method of operating data-processing system for monitoring and control of the replication of a one-pot dish prepared on the robotized master cooker (10.0) and, in real time, on one or more remotely located identical robotized slave cookers (10.i) according to claim 1, **characterized in that,** the power regulation $P_{c,i}(t)$ of all slave cookers (10.i), in order to replicate the master cooker (10.0) thermograph $T(t)_{c,0}$, is performed in a way that for times $t > \Delta t_i$ the following relation is used:

$$P_{c,i}(t) = P_{c,0}(t - \Delta t_i) + A \cdot \left( T_{c,0}(t - \Delta t_i) - T_{c,i}(t) \right)$$

where constant $A$ is defined empirically for all slave cookers (10.i).

3. The method of operating data-processing system for monitoring and control of the replication of a one-pot dish prepared on the robotized master cooker (10.0) and, in real time, on one or more remotely located identical robotized slave cookers (10.i) according to any of the previous claims, **characterized in that,** any of the robotized slave cookers (10.i) can act as the robotized master cooker (10.0), if needed.

4. The method of operating data-processing system for monitoring and control of the replication of a one-pot dish prepared on the robotized master cooker (10.0) and, in real time, on one or more remotely located identical robotized slave cookers (10.i) according to any of the previous claims, **characterized in that,** the server (30) collects and processes the feedback information of the users regarding the quality of the replicated one-pot dishes from every robotized slave cooker (10.i) separately.

5. Use of the method of operating data-processing system for monitoring and control of the replication of a one-pot dish prepared on the robotized master cooker (10.0) and, in real time, on one or more remotely located identical robotized slave cookers (10.i) according to any of preceding claims 1-4, **characterized in that,** it is used for preparation and testing of dishes in a TV culinary spectacle.

6. Use of the method of operating data-processing system for monitoring and control of the replication of a one-pot dish prepared on the robotized master cooker (10.0) and, in real time, on one or more remotely located identical robotized slave cookers (10.i) according to any of preceding claims 1-4, **characterized in that,** it is used for preparation of dishes in restaurants within the same franchise, cooking alive from a central location or based on previously stored cooking data.

7. A data-processing system which is consisting of at least one server (30), connected to one robotized master cooker (10.0) and at least one robotized slave cooker (10.i) as defined in claim 1, mutually networked through a network infrastructure (90), for performing the method in accordance with any of claims 1-4.

**Patentansprüche**

1. Verfahren zum Betreiben eines Datenverarbeitungssystems (30) zum Überwachen und Steuern der Nachbildung eines Eintopfgerichts, das auf einem robotisierten Master-Kocher (10.0) und in Echtzeit auf einem oder mehreren entfernt gelegenen identischen robotisierten Slave-Kochern (10.i) zubereitet wird, die innerhalb einer Netzwerkinfrastruktur (90) vernetzt sind durch die entsprechenden Netzwerkverbindungen (20.i); i=1 ... N, mit denen der robotisierte Master-Kocher (10.0) mit seiner eigenen Netzwerkverbindung (20.0) verbunden ist;

- wobei jeder robotisierte Kocher (10) enthält: eine Reihe von steuerbaren Zutatenfächern (11), einen robotisierten Gewürzspender (14) mit Gewürz- /Würzmittelbehältern (13), wobei deren Status als Vorrichtungsstatus von Zutatenfächern und Gewürzbehältern $I_j(t)$ über der Zeit gespeichert wird, wobei der Index $j$ das Fach (11) oder den Behälter (13) bezeichnet, einen Mixerantrieb mit Wasserspender (15) mit einem Vorrichtungsstatus $M(t)$ über der Zeit, einen Kochtopf (19), einen Thermographen zur Messung der tatsächlichen Kochtemperatur $T_c(t)$, ein elektrisches Kochfeld (18) mit den Informationen zur abgegebenen Kochleistung $P_c(t)$ über der Zeit und ein Steuerungsmodul mit der Schnittstelle (17), das alle oben genannten Teile des robotisierten Kochers (10) steuert und eine Verbindung zur Netzwerkinfrastruktur (90) herstellt;

- wobei alle robotisierten Kocher (10) vor dem Beginn des Kochprozesses mit den gleichen Zutaten und Gewürzen bestückt werden;

- wobei das Datenverarbeitungssystem für die Gerichtnachbildung als ein Server (30) ausgebildet ist, der zur Datenverarbeitung fähig ist, über seine Netzwerkverbindung (31) mit der oben genannten Netzwerkinfrastruktur (90) verbunden ist, und der Echtzeitinformationen von dem robotisierten Master-Kocher (10.0) und allen robotisierten Slave-Kochern (10.i) empfängt, die unterschiedliche anfängliche Kochbedingungen aufweisen, und wobei dieser Server (30) über ein Steuerungsmodul mit Schnittstellen (17.i) die Nachbildung des auf jedem Slave-Kocher (10.i) zubereiteten Gerichts steuert, indem er die Werte $T_{c,0}(t)$, $P_{c,0}(t)$, $I_{0,j}(t)$, $M_0(t)$ und $T_{c,i}(t)$ des robotisierten Master-Kochers (10.0) aufzeichnet und die Werte $P_{c,i}(t)$, $I_{i,j}(t)$, $M_i(t)$ der robotisierten Slave-Kocher (10.i) gemäß den aufgezeichneten Werten des Master-Kochers (10.0) steuert;

wobei das Verfahren aus den folgenden Schritten unter Steuerung des Servers (30) besteht:

A. Aufzeichnen der Anfangstemperatur $T_{c,0}(t=0)$ des Master-Kochers (10.0) und aller Anfangstemperaturen $T_{c,i}(t=0)$ der Slave-Kocher (10.i) und Überwachen der genannten Thermographen über der Zeit, sobald der Kochprozess auf dem Master-Kocher (10.0) gestartet wurde, wobei der Master-Kocher (10.0) manuell über sein Steuerungsmodul mit der Schnittstelle (17) gesteuert wird;

B. der Server (30) zeichnet den Thermographen $T_{c,0}(t)$, die Kochleistung $P_{c,0}(t)$, den Status der Zutatenfächer und Gewürzbehälter $I_{0,j}(t)$ und den Status des Mixerantriebs mit Wasserspender $M_0(t)$ am Master-Kocher (10.0) als Funktion der Zeit $t$ auf;

C. wenn die Temperatur $T_{c,0}(t)$ des Master-Kochers (10.0) die Schwellentemperatur $T_{tr}$, $T_{c,0}(t)>T_{tr}$ übersteigt, startet der Server (30) die Steuerung des Kochprozesses auf den robotisierten Slave-Kochern (10.i), um in den Slave-Kochern die aufgezeichneten Werte $T_{c,0}(t)$, $P_{c,0}(t)$, $I_{0,j}(t)$ und $M_0(t)$ des robotisierten Master-Kochers (10.0) nachzubilden, die Kocher über ihre Netzwerkverbindungen (20.i) steuernd, wobei der Kochprozess auf eine Weise vorgenommen wird:

(i) dass die Leistungsregelung $P_{c,i}(t)$ aller Slave-Kocher (10.i) so geregelt wird, dass sie den Thermographen $T_{c,0}(t)$ des Master-Kochers (10.0) durch die Slave-Kocher (10.i) nachbildet, wobei für jeden $T_{c,0}(t)>T_{tr}$ die folgende Gleichung erfüllt ist:

$$T_{c,i}(t) \approx T_{c,0}(t - \Delta t_i)$$

wobei jeder Wert $\Delta t_i$ die Zeitdifferenz zwischen dem Beginn des Kochprozesses auf jedem ausgewählten Slave-Kocher (10.i) und dem Master-Kocher (10.0) definiert, berechnet aus den historischen Daten, um gleichzeitig $T_{c,i}(t' + \Delta t_i) = T(t')_{c,0}$ und $T_{c,0}(t') = T_{tr}$ zu erfüllen;

(ii) wobei der Status aller Zutatenfächer und Gewürzbehälter jedes Slave-Kochers (10.i) in ihrer Ausgabe um die zuvor bestimmte Zeit $\Delta t_i$ verzögert wird, um die Beziehung: $I_{i,j}(t) = I_{0,j}(t-\Delta t_i)$ in Bezug auf den Master-Kocher (10.0) einzuhalten; und

(iii) wobei der Status des Mixerantriebs und des Wasserspenders an jedem Slave-Kocher (10.i) in seiner Ausgabe und seinem Rühren um die zuvor bestimmte Zeit $\Delta t_i$ verzögert wird, um die Beziehung: $M_i(t) = M_0(t-\Delta t_i)$ in Bezug auf den Master-Kocher (10.0) einzuhalten; und

D. wenn der Kochprozess auf dem Master-Kocher (10.0) abgeschlossen ist, dauern die Kochprozesse auf den entsprechenden robotisierten Slave-Kochern (10.i) noch um $\Delta t_i$ länger an, bis der Eintopfgericht-Nachbildungsprozess auf jedem Slave-Kocher (10.i) abgeschlossen ist.

2. Verfahren zum Betreiben eines Datenverarbeitungssystems zum Überwachen und Steuern der Nachbildung eines Eintopfgerichts, das auf dem robotisierten Master-Kocher (10.0) und in Echtzeit auf einem oder mehreren entfernt gelegenen identischen robotisierten Slave-Kochern (10.i) zubereitet wird, nach Anspruch 1, **dadurch gekennzeich-**

**net, dass** die Leistungsregelung $P_{c,i}(t)$ aller Slave-Kocher (10.i), um den Thermographen $T(t)_{c,0}$ des Master-Kochers (10.0) nachzubilden, auf eine Weise durchgeführt wird, dass für die Zeiten $t > \Delta t_i$ Att die folgende Beziehung verwendet wird:

$$P_{c,i}(t) = P_{c,0}(t - \Delta t_i) + A \cdot \left( T_{c,0}(t - \Delta t_i) - T_{c,i}(t) \right)$$

wobei die Konstante **A** empirisch für alle Slave-Kocher (10.i) definiert wird.

3. Verfahren zum Betreiben eines Datenverarbeitungssystems zum Überwachen und Steuern der Nachbildung eines Eintopfgerichts, das auf dem robotisierten Master-Kocher (10.0) und in Echtzeit auf einem oder mehreren entfernt gelegenen identischen robotisierten Slave-Kochern (10.i) zubereitet wird, nach einem der vorstehenden Ansprüche, **dadurch gekennzeichnet, dass** jeder der robotisierten Slave-Kocher (10.i) bei Bedarf als der robotisierte Master-Kocher (10.0) fungieren kann.

4. Verfahren zum Betreiben eines Datenverarbeitungssystems zum Überwachen und Steuern der Nachbildung eines Eintopfgerichts, das auf dem robotisierten Master-Kocher (10.0) und in Echtzeit auf einem oder mehreren entfernt gelegenen identischen robotisierten Slave-Kochern (10.i) zubereitet wird, nach einem der vorstehenden Ansprüche, **dadurch gekennzeichnet, dass** der Server (30) die Rückmeldungsinformationen der Benutzer in Bezug auf die Qualität der nachgebildeten Eintopfgerichte von jedem robotisierten Slave-Kocher (10.i) getrennt sammelt und verarbeitet.

5. Verwendung des Verfahrens zum Betreiben eines Datenverarbeitungssystems zum Überwachen und Steuern der Nachbildung eines Eintopfgerichts, das auf dem robotisierten Master-Kocher (10.0) und in Echtzeit auf einem oder mehreren entfernt gelegenen identischen robotisierten Slave-Kochern (10.i) zubereitet wird, nach einem der vorstehenden Ansprüche 1-4, **dadurch gekennzeichnet, dass** es zur Zubereitung und zum Testen von Gerichten in einer TV-Kochshow verwendet wird.

6. Verwendung des Verfahrens zum Betreiben eines Datenverarbeitungssystems zum Überwachen und Steuern der Nachbildung eines Eintopfgerichts, das auf dem robotisierten Master-Kocher (10.0) und in Echtzeit auf einem oder mehreren entfernt gelegenen identischen robotisierten Slave-Kochern (10.i) zubereitet wird, nach einem der vorstehenden Ansprüche 1-4, **dadurch gekennzeichnet, dass** es zur Zubereitung von Gerichten in Restaurants innerhalb desselben Franchise-Unternehmens verwendet wird, wobei von einem zentralen Standort aus live oder auf Basis von zuvor gespeicherten Kochdaten gekocht wird.

7. Datenverarbeitungssystem, das aus mindestens einem Server (30) besteht, der mit einem robotisierten Master-Kocher (10.0) und mindestens einem robotisierten Slave-Kocher (10.i) nach Anspruch 1 verbunden ist, die durch eine Netzwerkinfrastruktur (90) miteinander vernetzt sind, zum Durchführen des Verfahrens nach einem der Ansprüche 1-4.

## Revendications

1. Procédé de fonctionnement d'un système de traitement de données (30) pour la surveillance et la commande de la reproduction d'un plat en un seul contenant préparé sur un cuiseur maître robotisé (10.0) et, en temps réel, sur un ou plusieurs cuiseurs esclaves robotisés identiques situés à distance (10.i), mis en réseau au sein d'une infrastructure de réseau (90) par les connexions réseau (20.i) correspondantes ; i = 1... N, auxquelles le cuiseur maître robotisé (10.0) est connecté avec sa propre connexion réseau (20.0) ;

- où chaque cuiseur robotisé (10) contient : une série de compartiments à ingrédients commandables (11), un distributeur d'épices robotisé (14) avec des récipients à épices/assaisonnements (13), où leurs états sont sauvegardés comme un état de dispositif de compartiments à ingrédients et de récipients à épices $I_j(t)$ au fil du temps, où l'indice $j$ désigne le compartiment (11) ou le récipient (13), un entraînement de mélangeur avec distributeur d'eau (15) avec un état de dispositif $M(t)$ au fil du temps, un contenant de cuisson (19), un thermographe pour la mesure de la température de cuisson réelle $T_c(t)$, une table de cuisson électrique (18) avec les informations sur la puissance de cuisson délivrée $P_c(t)$ au fil du temps et un module de commande avec l'interface (17) qui commande toutes lesdites parties susmentionnées du cuiseur robotisé (10) et établit une connexion à l'infrastructure de réseau (90) ;

- où tous les cuiseurs robotisés (10) sont remplis avec les mêmes ingrédients et épices avant le début du processus de cuisson ;
- où ledit système de traitement de données pour la reproduction de plat prend la forme d'un serveur (30) capable d'un traitement de données, connecté à l'infrastructure de réseau (90) susmentionnée via sa connexion réseau (31), et qui reçoit des informations en temps réel à partir du cuiseur maître robotisé (10.0) et de tous les cuiseurs esclaves robotisés (10.i) présentant des conditions de cuisson initiales différentes, et où ce serveur (30), via un module de commande avec des interfaces (17.i), commande la reproduction du plat préparé sur chaque cuiseur esclave (10.i) en enregistrant les valeurs $T_{c,0}(t)$, $P_{c,0}(t)$, $I_{0,j}(t)$, $M_0(t)$ et $T_{c,i}(t)$ du cuiseur maître robotisé (10.0) et en commandant les valeurs $P_{c,i}(t)$, $I_{i,j}(t)$, $M_i(t)$ des cuiseurs esclaves robotisés (10.i), conformément aux valeurs enregistrées dudit cuiseur maître (10.0) ;

dans lequel ledit procédé consiste en les étapes suivantes sous la commande du serveur (30) :

A. l'enregistrement de la température initiale $T_{c,0}(t = 0)$ du cuiseur maître (10.0) et de toutes les températures initiales $T_{c,i}(t = 0)$ des cuiseurs esclaves (10.i) et la surveillance des thermographes mentionnés au fil du temps une fois que le processus de cuisson a démarré sur le cuiseur maître (10.0), où ledit cuiseur maître (10.0) est commandé manuellement via son module de commande avec l'interface (17) ;
B. le serveur (30) enregistre le thermographe $T_{c,0}(t)$, la puissance de cuisson $P_{c,0}(t)$, l'état des compartiments à ingrédients et des récipients à épices $I_{0,j}(t)$ et l'état de l'entraînement de mélangeur avec distributeur d'eau $M_0(t)$ sur le cuiseur maître (10.0) en fonction du temps $t$ ;
C. lorsque la température $T_{c,0}(t)$ du cuiseur maître (10.0) dépasse la température seuil $T_{tr}$, $T_{c,0}(t) > T_{tr}$, le serveur (30) démarre la commande du processus de cuisson sur les cuiseurs esclaves robotisés (10.i) de façon à reproduire dans les cuiseurs esclaves les valeurs enregistrées $T_{c,0}(t)$, $P_{c,0}(t)$, $I_{0,j}(t)$ et $M_0(t)$ du cuiseur maître robotisé (10.0), en commandant lesdits cuiseurs via leurs connexions réseau (20.i), où le processus de cuisson est mené de manière à ce que :

(i) la régulation de puissance $P_{c,i}(t)$ de tous les cuiseurs esclaves (10.i) soit régulée pour que le thermographe $T_{c,0}(t)$ du cuiseur maître (10.0) soit reproduit par les cuiseurs esclaves (10.i), où pour chaque $T_{c,0}(t) > T_{tr}$, l'équation suivante est satisfaite :

$$T_{c,i}(t) \approx T_{c,0}(t - \Delta t_i)$$

où chaque valeur $\Delta t_i$ définit la différence de temps entre le début du processus de cuisson sur chaque cuiseur esclave (10.i) sélectionné et le cuiseur maître (10.0), calculée à partir des données historiques afin de satisfaire simultanément à $T_{c,i}(t' + \Delta t_i) = T(t')_{c,0}$ et à $T_{c,0}(t') = T_{tr}$ ;
(ii) où l'état de tous les compartiments à ingrédients et récipients à épices de chaque cuiseur esclave (10.i) est retardé dans sa distribution pendant le temps déterminé précédemment $\Delta t_i$, pour maintenir la relation : $I_{i,j}(t) = I_{0,j}(t - \Delta t_i)$, par rapport au cuiseur maître (10.0) ; et
(iii) où l'état de l'entraînement de mélangeur et distributeur d'eau sur chaque cuiseur esclave (10.i) est retardé dans sa distribution et son mélange pendant le temps déterminé précédemment $\Delta t_i$ pour maintenir la relation : $M_i(t) = M_0(t - \Delta t_i)$, par rapport au cuiseur maître (10.0) ; et

D. lorsque le processus de cuisson est terminé sur le cuiseur maître (10.0), les processus de cuisson de cuiseurs esclaves robotisés (10.i) correspondants durent pendant un temps $\Delta t_i$ supplémentaire, jusqu'à ce que le processus de reproduction de plat en un seul contenant se termine sur chaque cuiseur esclave (10.i).

2. Procédé de fonctionnement d'un système de traitement de données pour la surveillance et la commande de la reproduction d'un plat en un seul contenant préparé sur le cuiseur maître robotisé (10.0) et, en temps réel, sur un ou plusieurs cuiseurs esclaves robotisés identiques situés à distance (10.i) selon la revendication 1, **caractérisé en ce que** la régulation de puissance $P_{c,i}(t)$ de tous les cuiseurs esclaves (10.i), afin de reproduire le thermographe $T(t)_{c,0}$ du cuiseur maître (10.0), est effectuée de manière à ce que, pour des temps t > $\Delta t_i$ la relation suivante soit utilisée :

$$P_{c,i}(t) = P_{c,0}(t - \Delta t_i) + A \cdot \left( T_{c,0}(t - \Delta t_i) - T_{c,i}(t) \right)$$

où la constante $A$ est définie empiriquement pour tous les cuiseurs esclaves (10.i).

3. Procédé de fonctionnement d'un système de traitement de données pour la surveillance et la commande de la reproduction d'un plat en un seul récipient préparé sur le cuiseur maître robotisé (10.0) et, en temps réel, sur un ou plusieurs cuiseurs esclaves robotisés identiques situés à distance (10.i) selon l'une quelconque des revendications précédentes, **caractérisé en ce que** l'un quelconque des cuiseurs esclaves robotisés (10.i) peut faire office de cuiseur maître robotisé (10.0), si nécessaire.

4. Procédé de fonctionnement d'un système de traitement de données pour la surveillance et la commande de la reproduction d'un plat en un seul récipient préparé sur le cuiseur maître robotisé (10.0) et, en temps réel, sur un ou plusieurs cuiseurs esclaves robotisés identiques situés à distance (10.i) selon l'une quelconque des revendications précédentes, **caractérisé en ce que** le serveur (30) collecte et traite les informations de rétroaction des utilisateurs concernant la qualité des plats en un seul récipient reproduits à partir de chaque cuiseur esclave robotisé (10.i) séparément.

5. Utilisation du procédé de fonctionnement d'un système de traitement de données pour la surveillance et la commande de la reproduction d'un plat en un seul récipient préparé sur le cuiseur maître robotisé (10.0) et, en temps réel, sur un ou plusieurs cuiseurs esclaves robotisés identiques situés à distance (10.i) selon l'une quelconque des revendications 1-4 précédentes, **caractérisée en ce qu'**elle est utilisée pour la préparation et le test de plats dans une émission culinaire télévisée.

6. Utilisation du procédé de fonctionnement d'un système de traitement de données pour la surveillance et la commande de la reproduction d'un plat en un seul récipient préparé sur le cuiseur maître robotisé (10.0) et, en temps réel, sur un ou plusieurs cuiseurs esclaves robotisés identiques situés à distance (10.i) selon l'une quelconque des revendications 1-4 précédentes, **caractérisée en ce qu'**elle est utilisée pour la préparation de plats dans des restaurants au sein de la même franchise, cuisant en direct à partir d'un emplacement central ou sur la base de données de cuisson stockées précédemment.

7. Système de traitement de données qui consiste en au moins un serveur (30), connecté à un cuiseur maître robotisé (10.0) et à au moins un cuiseur esclave robotisé (10.i) comme cela est défini dans la revendication 1, mutuellement mis en réseau par le biais d'une infrastructure de réseau (90), pour effectuer le procédé selon l'une quelconque des revendications 1-4.

Figure 1

Figure 2

10.1

10.3

10.N

10.2

10.4

20.1

20.2

20.3

20.4

20.i

20.N

90

31

20.0

30

10.0

Figure 3

**Figure 4A**

**Figure 4B**

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016160732 A1
- US 2016235239 A1
- DE 102015103596 A1
- EP 2769598 B1
- US 2016059412 A1

**Non-patent literature cited in the description**

- **S. REICHEL et al.** MAMPF - An Intelligent Cooking Agent for Zoneless Stoves. *2011 Seventh International Conference on Intelligent Environments, Nottingham*, 2011, 171-178